# EUROPEAN PATENT APPLICATION

(11) **EP 2 391 059 A1**
(43) Date of publication of application: **30.11.2011**
(21) Application number: 09838615.4
(22) Date of filing: 22.01.2009
(51) Int. Cl.: H04L 12/24

(54) **METHOD FOR PROVIDING FIREWALL TO IMS NETWORK TERMINALS AND FIREWALL SYSTEM**

(71) Applicant: Alcatel Lucent, 75008 Paris (FR)
(72) Inventor: WANG, Zhi, Qingdao Shandong 266101 (CN)
(74) Representative: Benezeth, Philippe J.L. M.
(86) International application number: PCT/CN2009/070275
(87) International publication number: WO 2010/083648

(57) **Abstract**

A method for providing firewall for terminals in the IMS network and a firewall system are provided. The method includes: arranging a firewall system in the IMS network; acquiring an identification information of said terminal, when the firewall system receives a request for providing the terminal with a firewall from a network element; sending an identification information of the firewall system to the terminal and related network elements; and managing at least part of the communication activities between said terminal and other network elements by the firewall system, wherein, said other network elements include network elements in the IMS network and/or network elements which communicate with said terminal via the IMS network.

## Description

### Technical Field

This invention relates to network communication, and more particularly, relates to a method and system for enhancing the communication security of terminals in an IMS network.

### Background

As widely usage of various types of networks, people are tending to more and more dependent on networks to communicate and acquire various resources. However, with the rapid growth of numerous networks based technologies, network crimes continual and the security of networks arouses a wide concern of people. In practice, most network crimes are not only in a form of data interception, but also involve intruding into networks to gain unauthorized access to data, or even change data, destroy data, make unauthorized use of the network resource, etc. Apparently, for users, the privacy of data and security of communication have suffered a great threat.

In order to prevent network resources from network attacks, firewall is proposed to guarantee the security of networks. By the use of firewall, a protection over data is realized and network resources are shielded from potential ravages of network intruders. A successful firewall allows network elements to communicate and interact with other communication nodes while ensuring the network elements not to subject to attack or unauthorized inquiry or the like from networks.

In order to meet the increasingly various requirements of users on network services, 3GPP proposed an IMS system (IP Multimedia Subsystem) in Release 5 Specifications. Such system sets up a platform that is irrelevant to access, based on open SIP/IP protocols and supportive of various multimedia service types to offer more abundant services. The system combines a plurality of technologies, such as cellular mobile communication networks, traditional fixed networks and Internet or the like, to provide a universal service intelligence platform for the future whole IP network-based multimedia applications, and to provide a technical basis for network convergence in the future network development as well. The plenty of characteristics of the IMS enable it to be an ideal solution for achieving future network convergence and a direction of development.

Since the IMS network is connected with the internet, an IP protocol-based and open network architecture enables various different services to share a service platform by employing a plurality of various access manners, thus increases the flexibility of networks and intercommunity among terminals. However, the security requirements of the IMS are much higher than that of operations on independent networks by traditional operators due to the IMS is established on the basis of IP, so the security problem of the IMS cannot be ignored no matter the mobile access or fixed access. Hence, it is of critical importance for communication terminals in the IMS network, as network elements communicating and interacting with public networks, to have their own firewalls to protect themselves from attacks and unauthorized access. However, not all the IMS terminals have enough memory and computing ability to run the firewall. Even for the IMS terminals that have installed their individual firewall systems, the firewall maintenance is also a problem, for example, whether the firewall is updated timely, whether it's configured correctly, whether the firewall system is powerful enough, etc. Moreover, maintaining a network security configuration means a big workload for the IMS users, especially for the users who don't have enough related knowledge- users not only have to spend a lot of time and efforts on it, but also need to possess sufficient knowledge relating to the network security, at least to the use of the firewall.

Moreover, it is known that telecommunication networks own more mobile devices (e.g. mobile phone, PDA, etc.) than ordinary computer networks. But different from PC, these mobile devices normally lack of enough resources (e.g. CPU, memory, etc.) to run firewalls of high performance, and additionally, many legacy access devices, such as old telephone devices, are unqualified to install firewall software/hardware. In fact, the potential security dangerous of such mobile devices needs to be eliminated immediately. Therefore, how to relieve the burden of the IMS terminal users on firewall operation and configuration while protecting the security of the terminals in the IMS network is a problem to be solved urgently.

### Summary

To solve the problem mentioned above, this invention proposes a method of providing firewall to terminals in the IMS network and a firewall system for providing the IMS network terminals with security protection, to relieve the burden of the IMS network terminals on firewall operation or configuration, or even completely eliminate such burden.

According to one aspect of this invention, a method of providing a firewall to a terminal in an IMS network is provided, comprising the steps of:
setting a firewall system in the IMS network;
acquiring the identification information of the terminal when the firewall system receives a request of providing the terminal with a firewall from a network element;
sending the identification information of the firewall system to the terminal and a related network element;
managing at least a part of the communication activities between the terminal and other network elements by the firewall system, wherein, said other network elements include the network elements in the IMS network and/or the network elements which will communicate with the terminal via the IMS network.

Optionally, the network element is S-CSCF or its trusting party.

Wherein, the identification information of the terminal and firewall system comprises their IP address, MAC address, user ID, firewall serial number or any combination of above.

Optionally, the firewall system sends its identification information to the network element sending the request or its trusting party, and then the network element sending the request or its trusting party sends said identification information to said terminal, or the firewall system sends its identification information to the network element sending the request or its trusting party and said terminal respectively, or the firewall system sends its identification information to either of the network element sending the request or its trusting party, and said terminal.

Optionally, the network element sending the request or its trusting party sends the identification information of the firewall system to said terminal and related network elements. Optionally, said sending may be performed when/after sending said request message to said firewall system, or when/after determining sending said request message to said firewall system.

Optionally, the default setting is that once said terminal enters the IMS network and initiates a registration request or session request, the network element sending the request or its trusting party will sends a request for providing a firewall to the terminal to said firewall system.

Optionally, when said terminal enters the IMS network and initiates a registration request or session request, identification information is carried in the registration request or session request about whether there is a need to provide a firewall for the terminal, or whether there is a need for said firewall system to provide a specific service.

Optionally, the network element sending the request or its trusting party identifies the identification information carried in the request sent by said terminal, and does not send a request of providing the terminal with a firewall if said identification information indicates that there is no need to provide a firewall for said terminal.

Optionally, the firewall system identifies the identification information carried in the request sent by said terminal, and does not provide said terminal with a firewall service if said identification information indicates that there is no need to provide a firewall for said terminal.

Optionally, the firewall system identifies the identification information carried in the request sent by said terminal, and provides said terminal with a required specific firewall service if said identification information indicates that there is a need to provide a specific firewall service for said terminal.

Optionally, said specific firewall service is managing all the communication activities between said terminal and said other network elements, or managing a part of communication activities between said terminal and said other network elements.

Preferably, said firewall system provides a configuration module for said terminal, by which the terminal can set said firewall as not managing, partly managing or completely managing the communication activities between it and said other network elements.

Preferably, said part of communication activities may be classified in accordance with the type of communication protocols, the location area of other network elements locate in, the type of the resources that said terminal is to visit/ is visited, the security level, the sensitivity degree, the degree of privacy, etc.

According to one aspect of this invention, a firewall system in IMS network is provided, comprising:
a communication interface, for transceiving information;
an information acquisition module, for acquiring an identification information of a terminal when receiving a request of providing the terminal with a firewall from a network element sending the request via the communication interface; a communication management module, for sending an identification information of the firewall system to said terminal and/or related network elements via the communication interface and managing at least part of communication activities between said terminal and other network elements after receiving said identification information;
wherein, said other network elements include network elements in the IMS network and/or network elements in communication with said terminal via the IMS network.

According to another aspect of this invention, a firewall system in IMS network is provided, comprising:
a communication interface, for transceiving information;
an information acquisition module, for acquiring an identification information of a terminal when receiving a request for providing the terminal with a firewall from a network element via the communication interface;
a communication management module, for managing at least part of communication activities between said terminal and other network elements, after said identification information is received and an identification information of the firewall system is provided by said network element or its trusting party to said terminal and/or related network elements;
wherein, said other network elements include network elements in the IMS network and/or network elements in communication with said terminal via the IMS network.

Wherein, the communication management module identifies identification information carried in said request indicating whether or not the terminal needs a firewall service and/or whether a specific service is required; if it identifies the carried identification information indicating that there is no need to provide a firewall for said terminal, said firewall system will not provide said terminal with a firewall service, and will provide a specific service to said terminal if there is a need to provide a specific service for said terminal.

Preferably, said firewall system further comprises a configuration module, used for providing a configuration function for said terminal user.

According to another aspect of this invention, a firewall system in the IMS network is provided, for acquiring an identification information of a terminal when receiving a request for providing the terminal with a firewall from the network element, and managing at least part of communication activities between said terminal and other network elements, wherein, said other network elements include network elements in the IMS network and/or network elements in communication with said terminal via the IMS network.

According to another aspect of this invention, a network element in IMS network is provided, comprising:
a communication interface, for transceiving information;
a service control module, for determining whether or not a terminal needs a firewall service when information from the terminal is received; and if yes, sending a request message of providing said terminal with a firewall service to the firewall system;
a communication control module, for sending an identification information to said terminal when it receives the identification information identifying the firewall system from the firewall system via the communication interface, or for sending a stored identification information of said firewall system to said terminal after determining there is a need to send said request message; and sending all the information towards said terminal to said firewall system rather than said terminal.

Wherein, said network element may be implemented through software, hardware or combinations thereof.

According to another aspect of this invention, a terminal for accessing to the IMS network is provided, comprising:
a communication interface, for transceiving information;
an identification information acquisition module, for acquiring an identification information when receiving a message including the identification information of a firewall from the network element or firewall system via the communication interface;
a communication management module, for every time the terminal needs to communicate with other network elements, sending corresponding communication information to said other network elements via said firewall system after acquiring said identification information, wherein, said other network elements comprise network elements in the IMS network and/or network elements in communication with said terminal via the IMS network.

According to another aspect of this invention, an IMS network system is provided, comprising:
a terminal accessing the IMS network, for initiating a registration request or session request when it enters the IMS network;
a network element, for sending a request for providing the terminal with a firewall to a firewall system when it receives said registration request or session request;
a firewall system, for acquiring an identification information of said terminal when it receives said request; and managing at least part of communication activities between said terminal and other network elements, wherein, said other network elements include network elements in the IMS network and/or network elements in communication with said terminal via the IMS network.

According to another aspect of this invention, an IMS network system is also provided, comprising the terminal in the IMS network, the network element in the IMS network and the firewall system as stated above.

According to another aspect of this invention, a computer program product is also provided, comprising executable codes for performing any one of the above methods, or for performing any one of the above firewall systems or network elements or terminals.

The method and firewall system of this invention are capable of significantly relieve the burden of the IMS terminal users, or even completely eliminate such burden while protecting the security of the transactions between the IMS terminals and networks. For the IMS terminals which have already run a firewall, a protection of dual firewalls is afforded to them by the method and system of this invention, and the terminals are also provided with value-added services such as update assistance, configuration assistance, etc by employing this invention thus relieve their burden. While for the IMS terminals which do not have enough memory space and computing ability to run a firewall, or for the users who do not have sufficient knowledge about firewall maintenance and configuration, the firewall system of this invention can be selected for providing protecting for them, and thereby the burden on the terminals is thoroughly eliminated. In any cases, since the firewall proposed by this invention is a system that being deployed in the IMS network and independent from the IMS terminals, it does not use any resource on user equipments. Furthermore, the users don't need to take any effort for maintenance since it's undertaken by service providers. Moreover, compared with the firewall running on the IMS terminals, the firewall system can be more powerful and updated timely to better protect the communication security of the IMS terminals.

### Brief Description of the Drawings

A better understanding of this invention will be readily got by reading the following detailed description with a reference to the figures. However, it should be noted that, the network environment and method flows as illustrated in the figures as well as the examples in the literal part of this specification are all exemplary, which are merely used to explain the basic ideas of the invention and shall not be regarded as a limitation to this invention. Wherein:
Fig.1 illustrates a network architecture of providing a firewall system for the IMS terminal according to the embodiments of this invention;
Fig.2 illustrates an exemplary structure of the firewall system according to the embodiments of this invention;
Fig.3 illustrates the exemplary structure of the S-CSCF in the IMS network according to the embodiments of this invention;
Fig.4 illustrates the exemplary structure of the IMS terminal according to the embodiments of this invention;
Fig.5 illustrates the flow chart of the IMS terminal initiating registration or session when entering the IMS network according to the embodiments of this invention.

### Detailed Description

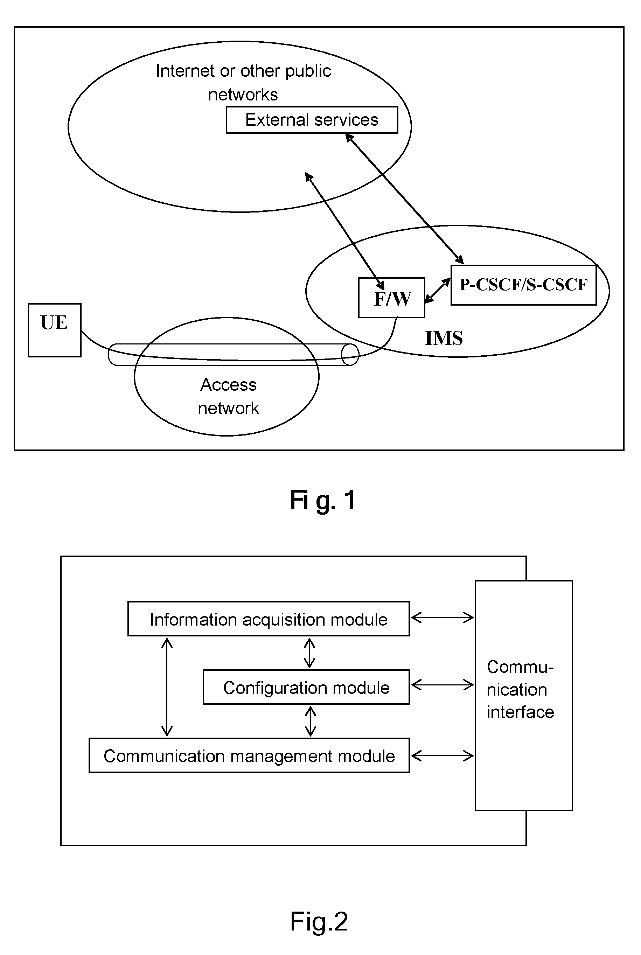

According to the principles of the invention, Fig.1 shows an illustrative network architecture of providing a firewall system for the IMS terminal. As can be seen in Fig.1, a user equipment (UE) visits the IMS network from an access network, wherein the UE can be any terminal having communicating ability, for example, fixed terminal like desktop, or mobile terminals such as PDA (Personal Digital Assistance), handset, notebook, portable communication device or the like. Wherein, the access network can be an IP-CAN (IP Connectivity Access Network), such as GPRS (in GSM/UMTS networks), ADSL (in Asymmetric Digital Subscriber Line) or WLAN (in Wireless Local Area Network). Furthermore, the IMS network illustrated in Fig.1 can include various network elements, e.g. P-CSCF (Proxy CSCF), I-CFCS (Interrogating CSCF), S-CSCF (Serving CSCF), other communication nodes (such as router and switch), etc. Further, Fig.1 also shows the Internet or other public networks coupled to the IMS network, wherein, said other public networks may be any types of networks that can connect with the IMS network and be visited via the IMS network.

Moreover, in the network architecture shown in Fig.1, a firewall system is introduced into IMS network to protect the IMS terminals. Once an IMS terminal registered into IMS network, or the UE initiates a session request to relevant components (e.g. P-CSCF) in the IMS network and has an authorization to obtain the service provided by the firewall system of this invention, the firewall system in the IMS network protects the security of the communication session and resource of the UE. Normally, the default setting can be configured as all the user equipments registered to the IMS network have the service. In other words, it is default that the firewall system manages all the issues about the security of all the IMS terminals. For the user equipments having this service, all the communication sessions/connections between the UE and other communication devices will be managed by the firewall system. Such other communication devices comprise

Related network elements in the IMS network, i.e., network elements generally involved when a UE establishes sessions/connections with other communication nodes, according to the used network specifications/protocols/specific configurations during usage, such as P-CSCF, I-CSCF, S-CSCF or the like.

Other network elements in the IMS network, namely, the communicating parties which UE will communicate with. In relative to the preceding "related network elements", they may also be called as "unrelated network elements", that is, network elements that are normally unnecessary to be involved when a UE establishes sessions/connections with other communication nodes, according to specific network specifications/protocols/detailed settings (of course, the expression of "unnecessary to be involved" here is not absolute, for instance, when a UE intends to communicate with S-CSCF, obviously, S-CSCF is the so-called communicating party of UE).
network elements that will communicate with UE via the IMS network, such as from the Internet and public networks shown in Fig.1.

In other words, the firewall system acts as a UE's agent in the IMS network, so that any information from the UE must go through the firewall system first and then being sent to other network elements in the IMS network, and any information towards the UE via the IMS network will also needs to pass the firewall system first and then being sent to the UE, whereby a safe communication between the UE and public networks is guaranteed.

According to the embodiments of this invention, Fig.2 illustrates the exemplary structural diagram of the firewall system. Wherein, the firewall system comprises: a communication interface, for receiving information from other network elements such as UE, S-CSCF or the like, and for transmitting related information to them; an information acquisition module, for acquiring the identification information of a terminal when receiving a request for providing the terminal with a firewall from the S-CSCF or its trusting party via the communication interface; a communication management module, for transmitting the identification information of the firewall system to the terminal and/or related network elements via the communication interface after receiving the identification information of the terminal, and managing at least a part of communication activities between the terminal and other network elements.

Here, as stated above, the other network elements include network elements in the IMS network and/or network elements to be communicated with said terminal via the IMS network.

Besides the communication interface, information acquisition module and communication management module, Fig.2 further illustrates other components that can be included in the firewall system. It should be noted that, although Fig.2 has illustrated these components, they are unnecessary for implementing the firewall system of this invention. In other words, these components enable the firewall system of the invention to provide additional/enhanced functions for UE.

Optionally, the firewall system of the invention also provides a configuration module for users to change their firewall configurations as required. Specifically, once the information acquisition module discovers that the information received via the communication interface is users' configuration information on the firewall, corresponding firewall configuration services will be provided for users through the configuration module.

Optionally, users can make configurations through the configuration module, and the users' configurations are implemented by the communication management module. Preferably, the firewall system can generate corresponding configuration files for users, and store them in the user information database. The user information database may operate on the same physical node with the firewall system, and may also be distributed on other physical nodes or background servers.

With the configuration module, users can configure which communication activities thereof can be managed by firewall system, e.g. only a part of their communication activities will be managed, instead of all the communication activities thereof.

While for the UE that have already installed a firewall, the users may configure that not to be managed by the firewall system though the configuration module. Of course, the users may still accept the management of the firewall system (at this time, both the firewall running on the UE and the firewall system of the invention are used to protect the communication safety of the UE, that is to say, the UE gets a dual protection). No matter which configurations the users choose, the invention has offered the UE users an approach to relieve their burden.

Preferably, the configuration module can also provide other value-added services for the UE users. Specifically, corresponding configurations are made through the configuration module for the UE that has installed a firewall, and the firewall system of the invention can provide various supports for the firewall running on UE:

Hole scanning, scanning the UE to check whether there is a security hole (for instance, whether a latest operating system (OS) path is installed on the UE, whether the software operating on the UE will cause a security problem, etc.). The scanning result will be notified to the user, or automatically repair the holes based on the configurations of the user.

Real-time updating, which provides UE with real-time updates or safe downloading paths. As the firewall system of the invention itself can conduct real-time updates, it generally can provide all kinds of real-time update information necessary for the firewall operating on the UE. So it is not necessary for the UE to obtain updates from other public networks such as the Internet or the like or other communication nodes via the IMS network, whereby the traffic in the network is reduced and the possibility of network congestion is decreased. Additionally, this prevents the UE from downloading updates from unsafe sites, or avoids possible attacks during downloading updates, whereby the communication safety of the UE is enhanced. Meanwhile, it shortens the latency of UE for obtaining updates, whereby the quality of service QoS is improved.

Checking updates, it notifies the user of installing corresponding updates when discovering there is an uninstalled update on the UE, or automatically install updates based on the user's configuration.

Checking the configuration of firewall, if any problem is discovered, notifying the user of related problem, preferably, of the preferred solution, or automatically performing the configuration update based on the user's configurations.

Providing configuration assistance, it can provide a more abundant technical support for the user to configure UE's own firewall, such as explanation documents and demonstration video, or can also enable the firewall system instead of the user to perform some configurations on the firewall operating on the UE through the user's configurations. In this manner, the firewall system can assist the user to maintain the firewall on his or her equipment. Apparently, it makes the firewall maintenance work much easier for those users who are lack of relevant experience/knowledge.

Fault repairing, it means that if the user conducts corresponding configurations via the configuration interface of the firewall system, when the firewall operating on the UE malfunctions, the UE may send a fault report or alert to both of the user and firewall system, or may only send it to the firewall system (specific implementing ways are dependent on the settings of the user). Furthermore, it can enable the firewall system to automatically repair the fault in the UE based on the settings of the user. In this case, once the communication interface of the firewall system receives any abnormal message from the UE, the firewall system can take the place of the user to conduct corresponding repairing/recovering work on his or her firewall.

Enabling and disabling of the firewall operating on the UE, namely, based on the settings of the user, disabling the firewall operating on the UE when the UE connects to the firewall system, and enabling the firewall operating on the UE when the UE disconnects with the firewall system. This function helps to apply the resource of E to more important tasks, while the work of protecting the UE is provisioned by the firewall system of the invention.

Generating configuration files, namely, according to the settings of the user, applying by default the settings in the generated configuration files to the UE next time the UE accesses to the IMS network, unless the user updates the configuration.

Anti-virus function, namely, according to the settings of the user, assisting the UE or replacing the anti-virus software on the UE to perform anti-virus protection, scanning, virus database updates, etc. In this situation, the firewall system of the invention can provide the UE with two functions of a firewall and anti-virus/virus killing, whereby the burden of the UE is further relieved.

In order to better implement the above functions, a database or storage medium may be disposed in the firewall system to store the configuration information of the user, or information databases or engines corresponding to each of the above functions may be disposed respectively. Of course, the firewall system may also be linked to a more powerful background database, or a separate database or engine, such as a hole scanning engine/hole database, an information update engine/database, a update checking engine, a configuration checking engine, a configuration assistance engine (which may include/connected to explanation document database, video demonstration database or the like), a fault repairing engine, a user configuration information database, a virus database, etc.

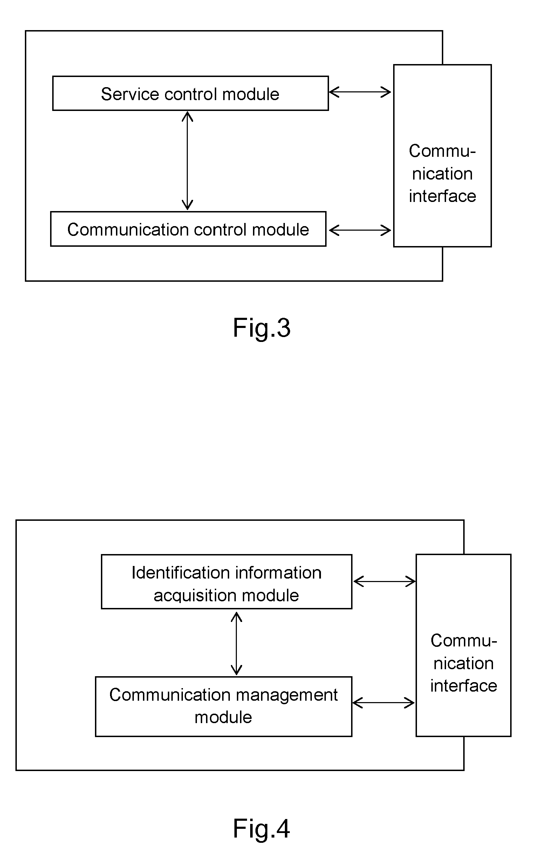

According to the embodiments of this invention, Fig.3 illustrates the exemplary structure of the network element such as the S-CSCF in the IMS network. As shown in the figure, the network element comprises a communication interface, for transceiving information; a service control module, for determining whether or not the terminal needs a firewall service when receiving a registration request/session request from the terminal (as stated above, the default setting here may be the terminal needs the service, or determining by means of the identification information set by the terminal in the sent request); and if yes, sending a request message of providing a firewall service for said terminal to the firewall system; a communication control module, for sending said identification information to said terminal when it receives identification information identifying the firewall system from the firewall system via the communication interface, or for sending the stored identification information of said firewall system to said terminal after determining there is a need to send said request message; additionally, the communication control module is used to send all the information towards said terminal to said firewall system, and then send the information to the terminal by the firewall system.

Optionally, the above functions implemented by the S-CSCF can be totally or partly transferred to its trusting party, and it is this trusting party implementing corresponding functions. When the trusting party takes charge of the above functions, it can communicate with the components in the IMS network like S-CSCF if needed.

According to the embodiments of the invention, Fig.4 illustrates an exemplary structure of the terminal accessing the IMS network. As shown in the figure, the terminal comprises: a communication interface, for transceiving information; an identification information acquisition module, for acquiring an identification information when receiving via the communication interface a message including the identification information of a firewall from a S-CSCF or its trusting party, or a firewall system; and a communication management module, for every time the terminal needs to communicate with the other network elements, sending corresponding communication information to said other network elements via said firewall system after acquiring said identification information, wherein, said other network elements comprise network elements in the IMS network and/or network elements to be in a communication with said terminal via the IMS network.

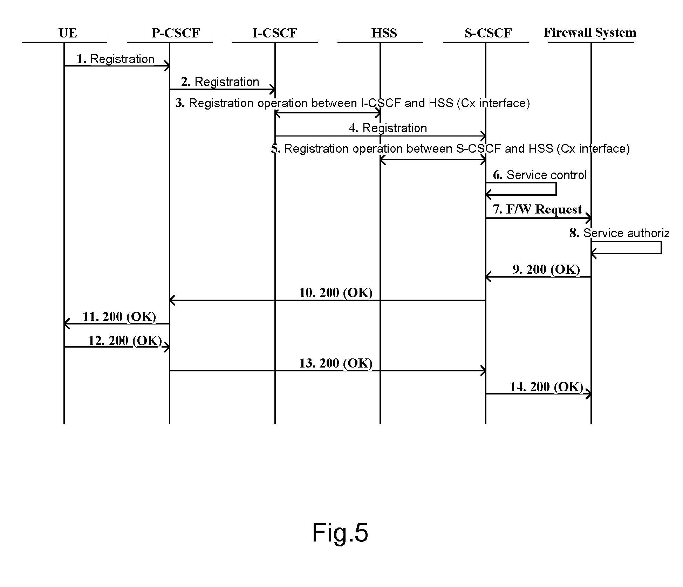

Fig.5 illustrates the flow of registration phase/initiating a session being performed when the UE accesses to an IMS network including the firewall system of this invention via an access network. Wherein, Steps 1-5 shown in Fig.5 is the process of initiating session/registration by the UE in the prior art: UE sends a registration message to P-CSCF which then forwards it to I-CSCF. I-CSCF selects S-CSCF for the user by inquiring HSS (for example, through a Cx interface used in the specifications). Subsequently, the S-CSCF interacts with the HSS, and performs user authentication. Specifically, the S-CSCF downloads a user profile from the HSS. The user profile is relatively important information, and besides user information, it further includes filtering rules of deciding when to forward the SIP request to an application server that provides services, while these filtering rules constitute a set of trigger conditions. As a service in the IMS network, the triggering of the firewall service of this invention may also be saved in the filtering rules.

Steps 6 and 7: Based on the filtering rules, the S-CSCF can decide whether the request from UE needs to go though one or more application servers which provide services to the user. Although the S-CSCF does not provide the specific service requested, it triggers the application servers to perform these services. If the user has a firewall service (the default setting is that all the users have this service), the S-CSCF will send registration information to the firewall system, such as the "F/W request" in Fig.5. This request includes the identification information of the UE, such as the address information of UE; in addition, depending on the specific performance of the firewall system, information such as the address of the P-CSCF, home network contact information, user identification (public user identification and private user identification) or the like can be comprised in the request according to actual needs.

Wherein, said identification information can be any types of information capable of uniquely identifying UE, which may be in form of numbers, alphabets, characters, or combinations thereof. Moreover, it can be of any kinds, for instance, MAC address, user ID, the IP address of UE, etc, or any combinations of above information.

Step 8: The firewall executes a necessary authorization check on the user based on for example user identification or other information, to assure that he or she is authorized to use the service provided by the firewall system. When the firewall system and IMS network are belonging to different network suppliers, such a authorization check is beneficial, but of course, the check is not compulsory, and whether to perform the check or not is dependent on specific application requirements. In the case that the firewall system and IMS network are belonging to a same network supplier, service control can be conducted at S-CSCF, i.e. judging whether UE is a user authorized to access to the IMS network, and then Step 8 can be omitted at the firewall system.

Steps 9, 10 and 11: If UE is an authorized user of the firewall system, the firewall system will send a 200(OK) message to UE, Step 9. Wherein, this message includes identification information that can uniquely identify the firewall, such as address information, so that UE and other related IMS components (such as P-CSCF and S-CSCF) know it's the firewall of UE. Once receiving this message, UE and other related IMS components will update their related configurations. Specifically, UE will store the address of the firewall as an address to contact with the network. After that, all the requests sent from UE will be sent to the firewall system first, then these requests will be forwarded to the correct address in the network by the firewall system. Other network elements in communication with the UE will store the address of the firewall and use it to replace the address of UE. Then, all the messages between the network and UE will be forwarded by the firewall system.

Optionally, the address information of the firewall may be added by the S-CSCF rather than by the firewall system, and in Step 10, the 200(OK) message that has been added the address information of the firewall is sent to the P-CSCF which will then send it to UE, i.e. Step 11.

Optionally, after adding its own address information into 200(OK) message, the firewall may not send the 200 (OK) message in sequence to the S-CSCF, P-CSCF and UE, as shown in the Fig.5. Alternatively, it may respectively send the message to the S-CSCF and UE. In other words, the firewall may directly send the 200(OK) message to UE, and the transmission of the 200(OK) message between the firewall and UE may use other protocols (such as H323, HTTP or the like).

Optionally, the firewall system may only send the 200(OK) message to UE, and let UE notify S-CSCF (a similar processing will be conducted in the case that the 200(OK) message is only sent to S-CSCF)

In a word, the above manners can be flexibly selected for the transmission of the 200(OK) message according to specific application configurations.

Steps 12, 13 and 14: Once the update is completed, 200 (OK) response will be sent back to the firewall system to notify the connectivity between the UE and firewall system in the IMS network. Then, the firewall system will work between the UE and IMS network for providing services to UE.

Optionally, similar with the firewall system sends the 200(OK) message in Step 9, UE may also not to send the 200 (OK) response in sequence to the P-CSCF, S-CSCF and firewall system, but send the response to P-CSCF and firewall system respectively, then let P-CSCF forward it to S-CSCF.

Optionally, the 200(OK) message can also not be sent back, instead, after a predefined time, communications between UE and IMS network will be managed via the firewall system. In other works, before UE leaves the IMS network, all the communication activities between UE and other network elements in the IMS network, or between UE and network elements in communication with UE via the IMS network, will go through the firewall system of this invention. However, if the user conducts a specific configuration, such a configuration will be used on a higher priority.

As stated above, in case UE itself operates a firewall, then it can make various settings mentioned hereinabove through the configuration module offered by the firewall system so that corresponding configuration files can be generated in the firewall system. After UE leaves the IMS network, next time it enters the IMS network again, if S-CSCF (related data can be arranged be maintained by S-CSCF or obtained by interacting with the firewall system) or firewall system discovers configuration information relating to UE, an existing configuration may be employed on UE.

Alternatively, the UE can be arranged as adding into the registration request sent in Step 1 identification/characteristic information about whether or not the firewall system services is required, or which particular kind(s) of services provided by firewall system is required. In this way, if UE does not have a firewall service, then S-CSCF only needs to take UE as an ordinary IMS terminal to process the prior art does.

As can be seen from above, once an IMS network includes the firewall system of this invention, all the communications between UE and IMS network as well as public networks are managed by the firewall system. Every request from/to UE over the IMS network will go through the firewall. In other words, the firewall can shield attacks from the IMS network and other public networks connected (wired or wireless) to IMS. Consequently, the problem that there is no network-level firewall for user equipments in the existing IMS network and users can only assure their communication safety by means of firewalls operating on the terminals is overcome.

Although the firewall system of this invention is capable of shielding UE from attacks originating from IMS network and external networks via the IMS network. But for the cases that access networks are not secure networks or some user equipments carrying sensitive information, a more comprehensive protection may be desired. In this situation, a VPN connection can be employed between UE and firewall system, whereby attacks from access networks can be shielded for UE. Such VPN connection may be any type of VPN connections suitable for UE and firewall system, e.g. MPLS VPN, IPSec VPN, etc.

The IMS network terminals in this invention refer to communicating parties having wireless/wired communicating ability that are positioned in the IMS network, or access to the IMS network via various types of access networks.

The network elements in this invention, also be called as communication nodes or communication units, refer to entities having communicating ability in the network, which can be implemented by software, hardware or combinations thereof.

The entities in this invention, such as the firewall system, the IMS terminals, the IMS network elements or the like, can be implemented by software, hardware or combinations thereof. In the process of implementation, a further combination or a further splitting can be conducted on the modules and interfaces described in this invention. Furthermore, various entities in the IMS network and the firewall system in this invention may be independent or distributive. In addition, they may locate on a single communication node in the network, or on a same communication node in the network. For example, the firewall system is totally/partly located on the communication node where the S-CSCF is located, and the communication node may include a whole/part of the implementation of the S-CSCF.

Although the above describes the exemplary embodiments of this invention in detail, a person skilled in the art shall understand that, according to the principles of this invention, amendments, alterations, deformations and improvements for adapting to specific application environment on the disclosure here, including combining and splitting, are all feasible, and are still within the protection scope of this invention as long as they do not depart from the spirit of this invention.

## Claims

1. A method of providing a terminal with a firewall in an IMS network, comprising the steps of:
arranging a firewall system in the IMS network;
acquiring an identification information of said terminal, when the firewall system receives a request for providing the terminal with a firewall from a network element;
sending an identification information of the firewall system to the terminal and related network elements; and
managing at least part of the communication activities between said terminal and other network elements by the firewall system, wherein, said other network elements include network elements in the IMS network and/or network elements which communicate with said terminal via the IMS network.

2. The method according to claim 1, wherein, the network element which sends said request is S-CSCF or its trusting party.

3. The method according to any one of the preceding claims, wherein, once said terminal enters the IMS network and initiates a registration request or session request, the default setting is that said network element sends a request of providing a firewall for the terminal to said firewall system.

4. The method according to any one of the preceding claims, wherein when said terminal enters the IMS network and initiates a registration request or session request, identification information is carried in the registration request or session request about whether there is a need to provide a firewall for the terminal, and/or whether there is a need for said firewall system to provide a specific service.

5. The method according to claim 3 or 4, wherein, said network element which sends the request or its trusting party identifies said carried identification information, and does not send the request for providing the terminal with a firewall if said identification information indicates that there is no need to provide a firewall for said terminal.

6. The method according to clam 3 and 4, wherein the firewall system identifies said carried identification information, and does not provide said terminal with a firewall service if said identification information indicates that there is no need to provide a firewall for said terminal.

7. The method according to any one of the preceding claims, **characterized in that**, said firewall system provides a configuration function for terminal devices, said configuration function comprising at least one of: not managing, partly managing or completely managing said communication activities, conducting a hole scanning on terminals, providing terminals with real-time updates or links of downloading updates, checking the update conditions of terminals or automatically updating for terminals, checking the firewall configurations of terminals, configuring assistance, preferably comprising explanation documents, demonstration videos, fault repairing, enabling and disabling of the firewall on terminals, and generating configuration files.

8. A firewall system in an IMS network, comprising;
a communication interface, for transceiving information;
an information acquisition module, for acquiring an identification information of a terminal when receiving a request of providing the terminal with a firewall from the network element via the communication interface;
a communication management module, for sending an identification information of the firewall system to said terminal and/or related network elements via the communication interface after receiving said identification information, and managing at least part of communication activities between said terminal and other network elements;
wherein, said other network elements include network elements in the IMS network and/or network elements in communication with said terminal via the IMS network.

9. The firewall system according to claim 8, wherein, the network element which sends said request is S-CSCF or its trusting party.

10. The firewall system according to claim 8 or 9, wherein, the communication management module identifies identification information carried in said request about whether or not the terminal needs a firewall service and/or a specific service; if it identifies the carried identification information indicating that there is no need to provide a firewall for said terminal, said firewall system will not provide said terminal with a firewall service, and will provide a specific service for said terminal if needed.

11. The firewall system according any one of the preceding claims, **characterized in that**, it further comprises a configuration module, for providing a configuration function for said terminal via the communication interface, said configuration function including at least one of: not managing, partly managing or completely managing said communication activities, conducting a hole scanning on terminals, providing terminals with real-time updates or links of downloading updates, checking the update conditions of terminals or automatically updating for terminals, checking the firewall configurations of terminals, configuring assistance, preferably comprising explanation documents, demonstration videos, fault repairing, enabling and disabling of the firewall on terminals, and generating configuration files.

12. A firewall system in an IMS network, comprising:
a communication interface, for transceiving information;
an information acquisition module, for acquiring an identification information of a terminal when receiving a request for providing the terminal with a firewall from the network element via the communication interface;
a communication management module, for managing at least part of communication activities between said terminal and other network elements after said identification information is received and after an identification information of the firewall system is provided to said terminal and/or related network elements by the network element which sends said request or its trusting party;
wherein, said other network elements comprise network elements in the IMS network and/or network elements in communication with said terminal via the IMS network.

13. The firewall system according to claim 12, wherein, the communication management module identifies identification information carried in said request about whether or not the terminal needs a firewall service and/or a specific service; if it identifies the carried identification information indicating that there is no need to provide a firewall for said terminal, said firewall system will not provide said terminal with a firewall service, and provide a specific service for said terminal if needed.

14. The firewall system according any to one of the preceding claims, **characterized in that**, it further comprises a configuration module, for providing a configuration function for said terminal via the communication interface, said configuration function including at least one of: not managing, partly managing or completely managing said communication activities, conducting a hole scanning on terminals, providing terminals with real-time updates or links of downloading updates, checking the update conditions of terminals or automatically updating for terminals, checking the firewall configurations of terminals, configuring assistance, preferably comprising explanation documents, demonstration videos, fault repairing, enabling and disabling of the firewall on terminals, and generating configuration files.

15. A firewall system in the IMS network, for acquiring an identification information of a terminal when a request for providing the terminal with a firewall is received from the network element, and managing at least part of communication activities between said terminal and other network elements, wherein, said other network elements comprise network elements in the IMS network and/or network elements in communication with said terminal via the IMS network.

16. A network element in the IMS network, comprising:
a communication interface, for transceiving information;
a service control module, for determining whether or not a terminal needs a firewall service when a message from the terminal is received; and if yes, sending a request message of providing a firewall service for said terminal to the firewall system;
a communication control module, for sending an identification information to said terminal when receiving an identification information identifying the firewall system from the firewall system via the communication interface, or for sending a stored identification information of said firewall system to said terminal after determining there is a need to send said request message; and sending all the information towards said terminal to said firewall system rather than said terminal.

17. A terminal for accessing to an IMS network, comprising:
a communication interface, for transceiving information;
an identification information acquisition module, for acquiring an identification information when receiving a message including the identification information of a firewall from the network element or firewall system via the communication interface;
a communication management module, for every time the terminal needs to communicate with other network elements, sending corresponding communication information to said other network elements via said firewall system after acquiring said identification information, wherein, said other network elements comprise network elements in the IMS network and/or network elements in communication with said terminal via the IMS network.

18. A computer program product, comprising executable codes for performing the method according to any one of claims 1-3, or for performing the firewall system according to any one of claims 4-7, or for performing the network element according to claim 8, or for performing the terminal according to claim 9.
